(19) Europäisches Patentamt
European Patent Office
Office européen des brevets

(11) EP 4 653 958 A1

## (12) EUROPEAN PATENT APPLICATION

(43) Date of publication:
26.11.2025 Bulletin 2025/48

(21) Application number: 24176852.2

(22) Date of filing: 20.05.2024

(51) International Patent Classification (IPC):
G05B 13/04 $^{(2006.01)}$   G05B 13/02 $^{(2006.01)}$

(52) Cooperative Patent Classification (CPC):
G05B 13/048; G05B 13/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ABB SCHWEIZ AG
5400 Baden (CH)

(72) Inventors:
• RASTEGARPOUR, Soroush
723 59 Västerås (SE)
• FEYZMAHDAVIAN, Hamid
169 73 Stockholm (SE)
• LJUNGBERG, Fredrik
723 37 Västerås (SE)

(74) Representative: Kransell & Wennborg KB
P.O. Box 27834
115 93 Stockholm (SE)

## (54) CONTROLLING AN INDUSTRIAL PROCESS

(57) The invention is concerned with a method, process control device, process control system excitation arrangement, control device, process control system, computer program and computer program product for controlling an industrial process. The process control device obtains a prediction of a range of process control signals u(k: k + N) for the industrial process (32), which range of process control signals u(k: k + N) have been predicted using a prediction of a range of process response signals y(k: k + N) in a model of the industrial process (32) and which range of process response signals y(k: k + N) have been predicted based on a range of reference signals r(k: k + N) and applies the predicted process control signals u(k: k + N) in the control of the process (32).

$$\hat{y}(k + 1) = r(k + 1) + \alpha(\hat{y}(k) - r(k))$$
$$\hat{y}(k + 2) = r(k + 2) + \alpha(\hat{y}(k + 1) - r(k + 1))$$
$$\vdots$$
$$\hat{y}(k + N) = r(k + N) + \alpha(\hat{y}(k + N - 1) - r(k + N - 1))$$

Fig. 7

EP 4 653 958 A1

**Description**

FIELD OF THE INVENTION

The invention relates to the field of process control systems. The invention more particularly concerns a method, process control device, process control system, computer program and computer program product for controlling an industrial process.

BACKGROUND OF THE INVENTION

Model based control is a powerful tool used in process control systems. Model-based control is for instance described in WO 2007/001252.

Model-based control - for example model predictive control (MPC) - relies on having a model that mimics the behaviour of the actual controlled process.

Thus, model-based control, such as Model Predictive Control (MPC), is a known tool for the closed-loop optimal control of industrial processes with constraints and actuator limitations. The performance of an MPC algorithm depends on the system model underlying the MPC scheme. Designing such an accurate model is challenging because the practically available system information can usually only be used to obtain a simplified, and thus inaccurate, representation of the real complex system. Furthermore, the performance of an MPC algorithm also depends on understanding the actual limitations of actuators, a task that can often be challenging due to the difficulty in precisely determining their values.

Similarly, Economic Model Predictive Control ((E)MPC) solutions are standard tools for the closed-loop optimal control of industrial processes with constraints and actuator limitations, and benefit from a rich theory to assess their closed-loop behaviour.

However, unfortunately, MPC design process hinges on the quality of the model underlying the control scheme and accurate nonlinear models are often hard to come by.

One way to improve on the situation is to adapt the MPC model based on a data-driven approach to better align with the actual system. Nonetheless, it is important to note that simply fitting the model to the data may not always yield the optimal policy within the (E)MPC scheme, and in some cases, it can even have adverse effects.

One practical approach to reducing the model dependency of the (E)MPC solution is to use a (Reinforcement Learning) RL agent to directly tune the MPC scheme incorporating rate and path constraints to increase the performance on the real system. This way, in fact, MPC will be used as a function approximator in RL to establish a connection between RL and economic MPC. The combination of learning and control techniques has been well studied in literature. However, the solutions derived from those frameworks are all subject to intensive and expensive computation, where economic MPC needs to be called in each episode, meaning exhaustive exploration of these environments would be inefficient and practically unfeasible.

Thus, there is a need for an improvement and especially one where the computational effort is reduced.

SUMMARY OF THE INVENTION

It is therefore an objective of the invention to improve the control of an industrial process and especially to reduce the computational effort needed in the control.

This objective is according to a first aspect achieved through a method for controlling an industrial process, the method being performed by a process control device and comprising:

obtaining a prediction of a range of process control signals û(k: k + N) for the industrial process, which range of process control signals û(k: k + N) have been predicted using a prediction of a range of process response signals y(k: k + N) in a model of the industrial process and which range of process response signals y(k: k + N) have been predicted based on a range of reference signals r(k: k +N), and

applying one or more of the predicted process control signals u(k: k + N) in the control of the process.

The objective is according to a second aspect achieved through a process control device for controlling an industrial process, the process control device comprising a processor operative to:

obtain a prediction of a range of process control signals û(k: k + N) for the industrial process, which range of process control signals û(k: k + N) have been predicted using a prediction of a range of process response signals y(k: k + N) in a model of the industrial process and which range of process response signals y(k: k + N) have been predicted based on a range of reference signals r(k: k +N), and

apply one or more of the predicted process control signals û(k: k + N) in the control of the process.

The objective is according to a third aspect achieved through a process control system comprising the process control device of the second aspect.

The objective is according to a fourth aspect achieved through a computer program for controlling an industrial process, the computer program comprising computer program code which when run by a processor causes the processor to

obtain a prediction of a range of process control signals û(k: k + N) for the industrial process, which range of process control signals û(k: k + N) have been predicted using a prediction of a range of process response signals y(k: k + N) in a model of the industrial process and which range of process response signals y(k: k + N) have been predicted based on a range of reference signals r(k: k +N), and
apply the predicted process control signals û(k: k + N) in the control of the process.

The objective is according to fifth aspect achieved through a computer program product for controlling an industrial process, the computer program product comprising a data carrier with the computer program according to the fourth aspect.

The model may comprise fitting parameters used to express the dependency of the process response to the process control signal to the actual process. The model may be of a type that is suitable for MPC where MPC is an acronym for Model Predictive Control.

The obtaining of the range of process control signals û(k: k + N) may comprise: predicting the range of process response signals y(k: k + N) based on the range of reference signals r(k: k +N), and
predicting the range of process control signals û(k: k + N) based on the predicted process response signals using the model.

The predicting of the range of process response signals may be performed in a process response predictor and the predicting of a range of process control signals may be performed in an inverse neural network, for instance in a trained inverse neural network. The process response predictor may be implemented by the processor or in the cloud. Also the inverse neural network may be implemented by the processor or in the cloud.

The processor may thus be operative to implement a process response predictor configured to predict the range of process response signals and/or a trained inverse neural network configured to predict the range of process control signals u(k: k + N).

The predictions of the process response signals y(k: k + N) may have been made based on the reference signals r(k: k +N) and a convergence rate $\alpha(k)$.

Furthermore, the convergence rate $\alpha(k)$ of the predictions of the process response signals y(k: k + N) may be optimized, where the optimization may have been made while considering constraints b of the predicted process response signals.

The obtaining of the range of process control signals û(k: k + N) may in this case further comprise optimising the convergence rate $\alpha(k)$ while considering constraints b of the predicted process response signals.

The optimizing may be performed in an optimizer, which may be provided by the processor or in the cloud.

The processor may thus be operative to implement an optimizer configured to optimize the convergence rate.

The range of reference signals r(k: k +N) may additionally be a range of optimal process response signals that the predicted process response signals are to converge against.

The optimization of the convergence rate $\alpha(k)$ may have been made based on a considering of a determined first mismatch $\vartheta_1$ between the model and the actual process together with the constraints for the predicted process response signals.

The obtaining of the range of process control signals û(k: k + N) may in this case further comprise:

determining the first mismatch $\vartheta_1$ between the model and the actual process, and
providing the first mismatch $\vartheta_1$ for being considered together with the constraints for the predicted process response signals in the optimizing of the convergence rate.

The first mismatch $\vartheta_1$ may be determined in a Reinforcement Learning agent provided by the processor.

The Reinforcement Learning agent may be implemented by the processor or in the cloud. The processor may thus be operative to implement a Reinforcement Learning agent configured to determine the first mismatch $\vartheta_1$. The Reinforcement Learning agent may additionally be an on-line Reinforcement Learning agent.

The optimization of the convergence rate $\alpha(k)$ may also be considering constraints of the predicted control signals û(k: k + N).

In this case the optimization of the convergence rate $\alpha(k)$ may have been made based on a considering of a determined second mismatch $\vartheta_2$ between the model and the actual process together with the constraints for the predicted control signals u(k: k + N).

The obtaining of the range of process control signals û(k: k + N) may in this case further comprise:

determining the second mismatch $\vartheta_2$ between the model and the actual process and
supplying the second mismatch $\vartheta_2$ for being considered together with the constraints for the predicted process control signals in the optimizing of the convergence rate $\alpha(k)$.

The second mismatch $\vartheta_2$ may also be determined in the Reinforcement Learning agent provided by the processor.

The method may further comprise obtaining a determined mismatch and supplying it to an operator. In this case, the processor may be further operative to obtain a determined mismatch and supply it to an operator.

The predicted process response signals y(k: k + N) may be process response signals predicted for a current parametrisation $\theta_P(k)$ of the model.

In this case the method may further comprise determining the current parametrisation $\theta_p(k)$ of the model and supplying it to the inverse neural network for being considered in the prediction of a range of process control signals.

In this case, the processor may be further operative to determine the current parametrisation $\theta_p(k)$ of the model and supply it to the inverse neural network for being considered in the prediction of a range of process control signals.

The determining of the current parametrisation may be made in the Reinforcement Learning agent. The parametrisation is also a capability factor for the inverse neural network that will limit the capability if the mismatch is high.

The model may have been trained using a set of training data comprising a training set of input and output signals. The training set of input and output signals may be a set of historic input and output signals. Alternatively, the set of input and output signals may be input and output signals obtained via a model of the process, such as an MPC model. Furthermore, in the training the set of input and output signals may have been fit to the predicted process response signals so that the predicted process response signals are provided at a distance to corresponding constraints $\varphi$.

In a variation of the first aspect, the method may further comprise training the model using the set of input and output signals. In a corresponding variation of the second aspect, the processor may be further operative to train the model using the set of input and output signals.

The training may in this case additionally comprise fitting the set of input and output signals to the predicted process response signals so that the predicted process response signals are distanced from the corresponding constraints $\varphi$. This may be realized through the absolute value of the estimated process control signal being higher than or equal to the constraint $\varphi$ or the difference between the absolute value of the estimated process control signal and the constraint $\varphi$ being higher than or equal to zero.

BRIEF DESCRIPTION OF THE DRAWINGS

The subject matter of the invention will now be explained in more detail in the following text with reference being made to preferred exemplary embodiments which are illustrated in the attached drawings, of which:

Fig. 1 schematically shows a vessel equipped with a process control device controlling an industrial process on the vessel,
Fig. 2 shows a block schematic of one realization of the process control device,
Fig. 3 schematically shows a computer program product comprising computer readable code which implements a process control function of the process control device,
Fig. 4 schematically shows the use of experimental data in a model of the industrial process,
Fig. 5 schematically shows input signals to and output signals from the model used for training,
Fig. 6 shows a flow chart of a number of method steps in a first embodiment of a method of controlling an industrial process being performed by the process control function,
Fig. 7 schematically shows a process response predictor, an inverse neural network implementing the process control system model of the process control function together with and an actual process being controlled using a control signal output from the inverse neural network,
Fig. 8 schematically shows the use of collected experimental data in the model of the industrial process, which use is based estimations of the process response being distanced from a corresponding constraint,
Fig. 9 shows a flow chart of a number of method steps in a second embodiment of a method of controlling an industrial process being performed by the process control function, and
Fig. 10 schematically shows the process response predictor, the inverse neural network, an optimizer and a reinforcement learning agent of the process control function together with the actual process being controlled using a control signal output from the inverse neural network.

DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well-known devices and methods are omitted so as not to obscure the description with unnecessary detail.

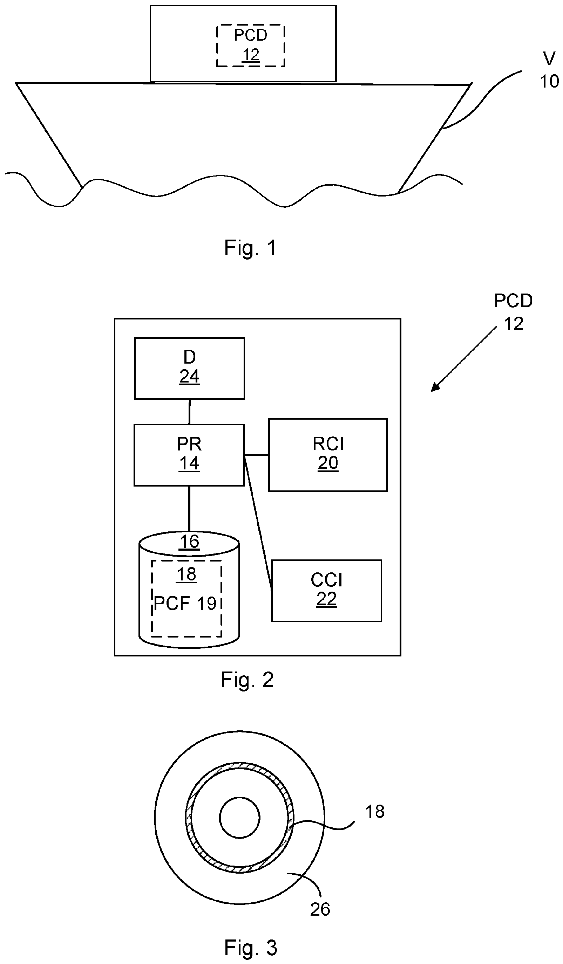

Fig. 1 schematically shows a vessel V 10 comprising a process control device PCD 12, which is a device for controlling an industrial process or a part of an industrial process. In the present example the controlling is the controlling of one or more processes of the vessel 10, such as path planning of the vessel 10 and controlling the vessel to follow the path. Thus, the process control device 12 controls one or more industrial processes of the vessel 10.

Fig. 2 shows one realization of the process control device PCD 12. The process control device 12 may comprise a processor PR 14 and a data storage 16 with computer program instructions 18 that, when executed by the processor 14, implements a process control function PCF 19, perhaps in the form of a vessel control function. There is also a first communication interface, here realized as a radio communication interface RCI 20 and a second communication interface, here realized as a computer communication interface 22. The radio communication interface 20 is also a transmitter that transmits radio signals. It should be realized that it is possible that the process control device 10 only comprises the radio communication interface and not the computer communication interface or vice versa. Optionally there is also a display D 24 connected to the processor 14 for displaying data to an operator of the vessel.

In some cases, some of the process control function 19 may also be implemented in the cloud or employ the cloud for processing. Parts of the process control function 19 may thus be implemented on a computing resource in a data centre, such as on a server blade, where it is additionally possible that this part is being assigned to a computing resource by a function assigning unit. Alternatively, the process control function 19 may connect to the cloud and request processing and receive the result of the processing therefrom.

The process control device 12 may thus comprise a processor 14 with associated program memory 16 including computer program code 18 for implementing the process control function 19.

A computer program may also be provided via a computer program product, for instance in the form of a non-transitory computer readable storage medium or data carrier, like a CD ROM or a memory stick, carrying such a computer program with the computer program code, which will implement the process control function when being loaded into a processor. One such computer program product in the form of a CD ROM 26 with the above-mentioned computer program code 18 is schematically shown in fig. 3.

As has been described above, the process control device 12 may perform path planning for the vessel 10.

It should here be realized that the path planning function is merely a first example of a process control function that the process control device can implement. The process control function 19 can be used for controlling other processes of the vessel 10. In fact, the process control function 19 is not limited to being used on the vessel 10. As a second example, it can be used in relation to control strategies for chemical reactors. As a third example it can be used for optimizing energy consumption while improving the overall product quality in heat exchanger network (HEN) control. As a fourth example, the process control function can be used in control design in robotics.

Path planning can in many cases be performed using model-based control, such as model predictive control (MPC), for instance in order to consider inevitable modelling errors and environmental disturbances such as wind, wave, and current. MPC ensures reliable and accurate trajectory planning, enhancing the vessel's safety and performance.

MPC may in the second example also be used to address the inherent instability of certain chemical processes, such as exothermic reactors, and maintain process variables at desired steady states. MPC can in the third example be used in the challenging task of controlling HENs, which exhibit nonlinear behaviour, complexity, and are prone to disturbances and noise. In the fourth example MPC may play a crucial role in robotics, particularly in scenarios where there are uncertainties in the robot dynamics or when manipulating unknown objects. By accounting for model uncertainties, MPC enables robust and adaptive control strategies for precise and efficient robotics operations.

However, model-based control typically requires a large amount of processing. Aspects of the present disclosure are directed towards improving on this.

To this point, one may investigate the possibility of running fast MPC based on model inversion by deep neural networks (Neural Network Inversion-based Model Predictive Control) to overcome the expensive computational effort of the traditional algorithms.

Neural-network inversion refers to the process of estimating the input sequence given its corresponding outputs. In the context of MPC, it means using neural network to predict the future input to the model for a desired optimal output trajectory.

From a control point of view, a direct MPC algorithm tries to find the optimal input sequence to guarantee an optimal output trajectory towards a given reference profile.

Alternatively, this problem can be oversimplified if the shape of control input sequence is already assigned. This can be achieved by using the inverse neural network concept.

How processing may be done according to a first embodiment will now be described.

According to aspects of the present disclosure predictions of process response signals are obtained from a range of given reference signals and these predictions are then used in a model of an inverse neural network for predicting control signals to be used for controlling an industrial process.

Before being put to use, the model may need to be trained.

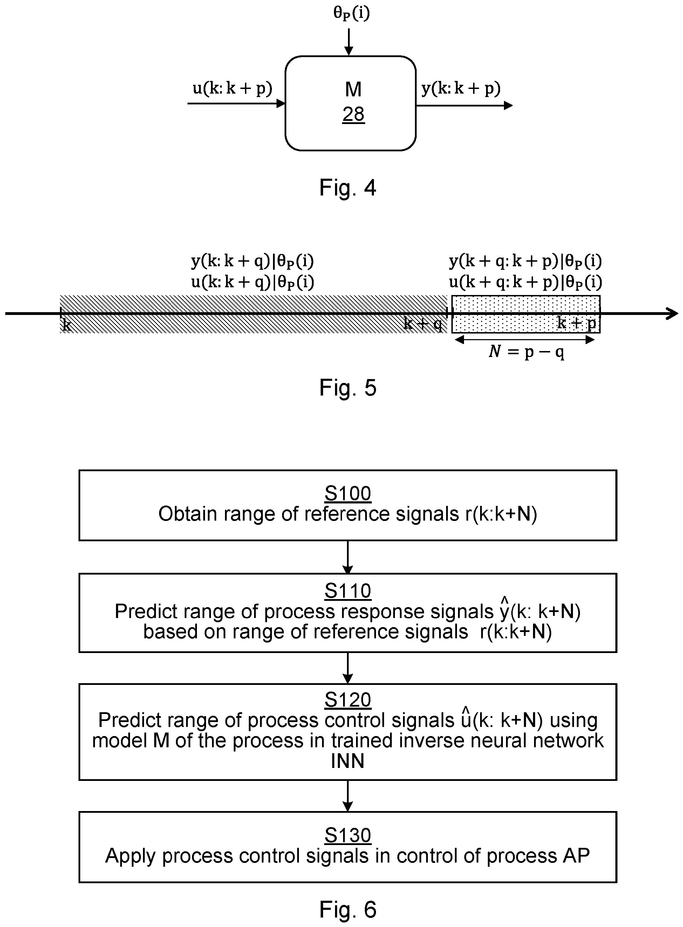

Fig. 4 schematically shows training of a model M 28 of the industrial process using input and output signals, where the input signals u are control signals used in the control of the industrial process and the output signals y are process response signals output from the industrial process and fig. 5 schematically shows collected data for use as input signals to and output signals from the model used for training and prediction.

It is possible that a parameterisation $\theta_p$ of a cost function and constraints of an MPC formulation $\theta_C$ of the process is used, where the model 28 may comprise fitting parameters used to express the dependency of the process response to the process control signal to the actual process. The model may be a model that is suitable for MPC and may additionally be a low-fidelity model.

The parameterized model $\theta_p$ may then be set to generate output data from a sequence of inputs covering all possible variations of the fitting parameters $\theta_P$, which output data y(k; k + p) are the process response signals used as input signals to the MPC model and the output data are the control signals (u(k; k:p) from the MPC model 28.

For instance, if there are k + q historic values of the input signal y and output signal u for different values of the fitting parameters $\theta_P$, these may be used for training the model, while future signals in a range k - (k + q) may be used for predictions for different values of the fitting parameters $\theta_P$. The range (k + q) - (k + p) may also be a range N in which predictions are to be made.

Thus, it is possible to retrieve a sequence of controls from a batch of past and future inputs/outputs for all possible values of the fitting parameters $\theta_p$, where the past signals may be obtained in an interval k - (k + q) and future signals in a range where N = p - q, see fig. 5 and 6.

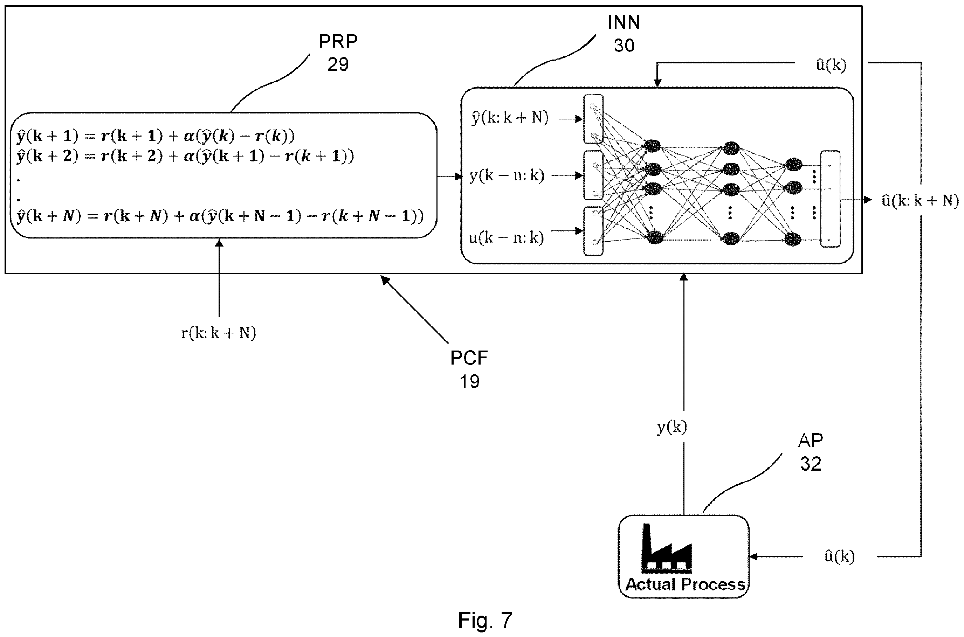

After the model 28 has been trained, it is then possible to predict process control signals u to be used in the control. How this may be done according to a first embodiment will now be described with reference being made to fig. 6 and 7, where fig. 6 shows a flow chart of a number of method steps in a first embodiment of a method of controlling an industrial process being performed by the process control function and fig. 7 schematically shows the process control function PRF 19 controlling an actual process AP 32, which process control function 19 comprises a process response predictor PRP 29, an inverse neural network INN 30 implementing the model of the industrial process and the actual process 32 being controlled using a control signal being output from the inverse neural network 30.

The operation may be started through the process control function 19 obtaining a range of reference signals r(k: k N), S100, which reference signals may be or correspond to a range of desired process response signals, such as a number of determined positions along a path of the vessel 10.

Thereafter, the process control function 19 may predict process response signals y(k: k + N) based on the range r(k: k +N) of reference signals, S110, where k is a current point in time and N is a range of time instances following after the current point in time.

The predicting may be made by the process response predictor 29 as a number of equations identifying a range of predictions of the process response signal y(k) as functions of the range of reference signals r(k).

As an example, a prediction of a process response signal at a time i after a current point in time k may be formulized as:

$$\hat{y}(k + i) = r(k + i) + \alpha(k)(\hat{y}(k + i - 1) - r(k + i - 1)), \quad i = 1 \ldots N$$

where r(k) represents the reference (planned) profile and $\alpha(k)$ is the convergence rate at time instant k, which convergence rate $\alpha(k)$ is a rate with which the process response signal converges towards the reference signal.

Thus, if the tasks of generating input control sequence is already assigned to the inverse neural network, the optimization problem of the MPC could be reformulated in a way to calculate an optimal output trajectory (y(k + i), $i = 1 \ldots N$) towards the reference profile with respect to the convergence rate $\alpha(k)$ for a prediction horizon N looking at a simple first order time-series system as indicated above.

As an example, it is possible to look at a number of equations associated to the prediction horizon N to sketch the optimal profile for:

$$\hat{y}(k + 1) = r(k + 1) + \alpha(\hat{y}(k) - r(k))$$

$$\hat{y}(k + 2) = r(k + 2) + \alpha(\hat{y}(k + 1) - r(k + 1))$$

.

.

.

$$\hat{y}(k + N) = r(k + N) + \alpha(\hat{y}(k + N - 1) - r(k + N - 1))$$

The range of predictions of the process response signals may then be used by the trained inverse neural network 30 in the model of the process control system for predicting the range of control signals for the industrial process, S120. The range of predictions of the process response signals may more particularly be used in the inverse neural network 30 together with a group of historic process response and control signals for predicting the range of control signals using the parameterised model of the process. If the range is defined by k + N and the historic interval is defined by k - n, then the range of control signals û(k: k + N)|$\theta_P$(k) for current values of the parametrisation $\theta_P$(k) is predicted through the use of the range of predictions of the process response y(k: k + N) |$\theta_P$(k) and the historic control and process response signals u(k - n: k) |$\theta_P$(k) and y(k - n: k) |$\theta_P$(k) in the model.

The model may here be a parametrized model defining a range of predicted output signals û(k: k + N) as a function of the predicted input signals y(k: k + N).

Thereafter the range of predicted control signals û(k: k + N) may be used for controlling the actual process 32. Thus, at least one of the predicted control signals may be applied in the control of the industrial process 32, S130. The process response y(k) caused by the control as well as the used output signal û(k) are also supplied to the inverse neural network 30 for being used in future estimations, such as for improving the used fitting parameters.

As was mentioned above, one or more of the process response predictor 29 and the inverse neural network 30 may be provided in the cloud. If both are provided in the cloud, it is possible that the range of reference signals is provided to the cloud in a request for processing and the range of predicted process control signals are returned as a response to the request for being used in the control.

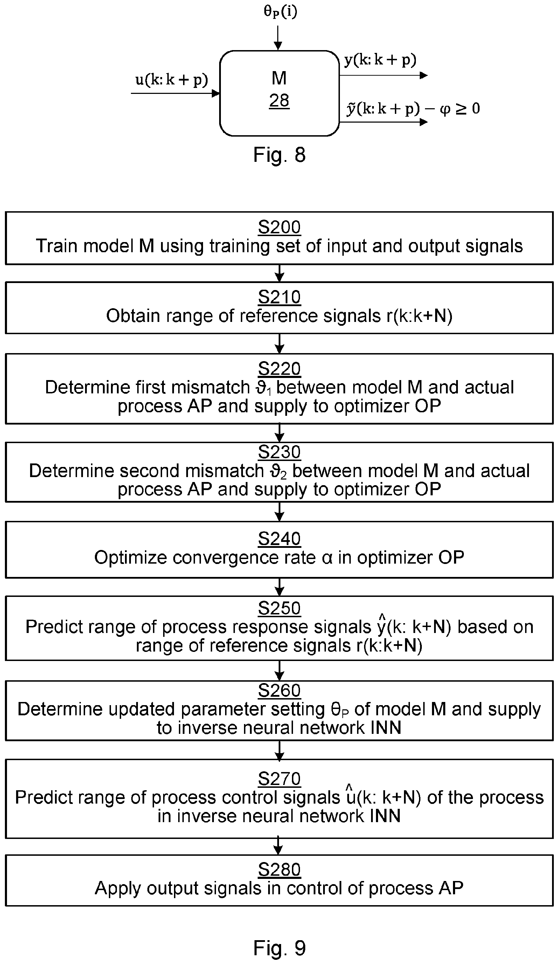

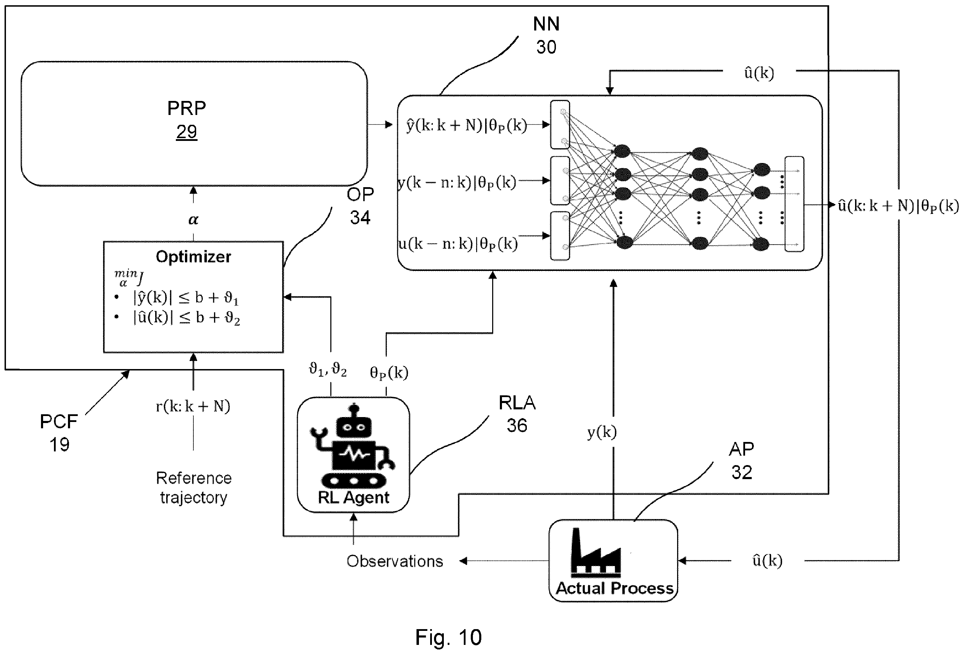

A second embodiment will now be described with reference being made to fig. 8, 9, 10 and 11q, where fig. 8 shows the training of the model, fig. 9 shows a flow chart of a number of method steps in the method of controlling the industrial process being performed by the process control function and fig. 10 shows the process control function used to control the actual process, where the process control function comprises the process control predictor, an optimizer, a reinforcement learning agent and the inverse neural network.

In this case, the process control function PCF 19 implements an optimizer OP 34 and an online Reinforcement Learning (RL) agent RLA 36 in addition to the process response predictor PRP 29 and inverse neural network INN 30.

The optimizer 34 optimizes a control problem that in this case involves the optimizing of the convergence factor $\alpha$. The RL agent 36 in turn determines at least one first mismatch between the MPC model and the actual process.

The operation may in this case be started through training of the model 28 using a training set of input and output data, S200, where the training set of input and output data may comprise collected historic data for the actual process or data generated through the use of an available process model, such as an MPC model. The training of the model 28 may in this case also involve predicting the process response signal ỹ using the output signal u and the parametrisation $\theta_P$ and applying a constraint $\varphi$ on this prediction. This constraint $\varphi$ can impact the performance and effectiveness of the control algorithm. To this scope, one can introduce the distance of the prediction ỹ from the constraint $\varphi$ as another output data set of the model. Thereby, the training may need to fulfil a criterion that the absolute value of the prediction ỹ minus the constraint $\varphi$ should be above zero. Put differently, the absolute value of the prediction should be equal to or higher than the constraint $\varphi$.

The training may more particularly involve fitting the input-outputs $(u(k: k + p), y(k: k + p))$ and $(u(k: k + p), ỹ(k: k + p) - \varphi \geq 0)$ of the set, where the latter guarantees the nonequality constraints on the output variables (ỹ).

After the training regular operation may be started. Operation may again involve the process control function 19 obtaining a range of reference signals r(k: k + N) for a prediction range N, S210, which reference signals may be or correspond to a range of desired process response signals that predicted process responses y(k: k + N) are to converge against. The reference signals r(k: k + N) are provided to the optimizer 34 as well as to the process response predictor 29.

Furthermore, in operation the RL agent 36 receives observations from the process 32, from which observations it is able to determine a first mismatch $\vartheta_1$ between the model 28 and the actual process 32, S220, which first mismatch $\vartheta_1$ may be a mismatch between the MPC formulation of the process and the actual process. The first mismatch may more particularly be a mismatch of a part of the MPC formulation that is related to the process response y, The RL agent 36 supplies the first mismatch $\vartheta_1$ to the optimizer 34. The RL agent 36 may additionally determine a second mismatch $\vartheta_2$, S230, which second mismatch $\vartheta_2$ may be a mismatch between the MPC formulation of the process and the actual process. The second mismatch $\vartheta_2$ may more particularly be a mismatch of a part of the MPC formulation that is related to the process control signal u. The RL agent 36 also provides this second mismatch $\vartheta_2$ to the optimizer 34. Thus, the RL agent 36 may be an on-line RL agent 36.

As before, the process response signal being predicted by the process response predictor 29 is a function of the reference trajectory r and a convergence rate $\alpha$.

The optimizer 34 optimizes the convergence rate $\alpha$ based on a constraint b of the predicted input signals y(k), S240. This constraint may additionally be adjusted with the first mismatch $\vartheta_1$. The first mismatch $\vartheta_1$ may for instance be added to the constraint b. The optimizer may also optimize the convergence rate $\alpha$ based on a constraint b on the predicted control signal u(k), which constraint may be adjusted with the second mismatch $\vartheta_2$. The second mismatch $\vartheta_2$ may for instance be added to the constraint.

The optimizer 34 aims at finding the optimum convergence rate $\alpha(k)$ to track the reference trajectory respecting the path constraints on y. This can be expressed as:

$$\min_{\alpha} J(\alpha_k, u_{k:k+N})$$
$$\text{s.t. } u_{k:k+N} = \text{net}\big(\hat{y}(k:k+N), y(k-n:k|\theta_P), u(k-n:k|\theta_P)\big),$$

n: length of hitorical data

$$\hat{y}(k+i) = r(k+i) + \alpha(k)\big(\hat{y}(k+i-1) - r(k+i-1)\big), \qquad i = 1 \dots N$$

$$J(k) = \sum_{i=1}^{N} (\hat{y}(k+i) - r(k+i))^2$$

where *net*() represents the trained inverse neural network.

Put differently, the optimizing may involve:

$$\min_{\alpha} J$$

subject to:

- 

$$\hat{y}(k) = r(k) + \alpha(k)(\hat{y}(k-1) - r(k-1))$$

- 

$$|\hat{y}(k)| \le b + \vartheta_1$$

- |
- 

$$|\hat{u}(k)| \le b + \vartheta_2$$

It is possible that additional constraints related to the effort and energy minimization are imposed to deal with non-uniqueness for over-actuated systems.

After the convergence rate has been optimized, the process response predictor 29 may predict a range of process response signals $\tilde{y}(k: k + N)$ for the model based on the range r(k: k + N) of reference signals, S250.

The predicting may be made in the form of a number of equations identifying a range of predictions of the process response signal as a function of the range of reference signals.

Also, here a prediction of a process response signal at a time i after a current point in time k may be formulized as:

$$\hat{y}(k+i) = r(k+i) + \alpha(k)(\hat{y}(k+i-1) - r(k+i-1)), \quad i = 1 \ldots N$$

Put differently, a number of equations may be formed as:

$$\hat{y}(k+1) = r(k+1) + \alpha(\hat{y}(k) - r(k))$$

$$\hat{y}(k+2) = r(k+2) + \alpha(\hat{y}(k+1) - r(k+1))$$

.

.

$$\hat{y}(k+N) = r(k+N) + \alpha(\hat{y}(k+N-1) - r(k+N-1))$$

The RL agent 36 also determines an updated parameter setting $\theta_p(k)$ of the model based on the observations from the actual process 32 and provides to the inverse neural network 30, S260.

The range of predictions of the process response signals may then be used by the trained inverse neural network 28 in the model of the process control system for predicting the range of control signals for the industrial process, S270. The range of predictions of the process response signals may more particularly be used in the inverse neural network 30 together with a group of historic process response and control signals for predicting the range of control signals using the parameterised model of the process. If the range is defined by k + N and the historic interval is defined by k - n, then the range of process control signals $\hat{u}(k: k + N)|\theta_P(k)$ for current values of the parametrisation $\theta_P(k)$ is predicted through the use of the range of predictions of the process response $y(k: k + N)|\theta_P(k)$ and the historic control and process response signals $u(k - n: k) |\theta_P(k)$ and $y(k - n: k) |\theta_P(k)$ in the model.

Thereafter the predicted range of output signals may be used as control signals for controlling the actual process, S280. Thus, one or more of the predicted process control signals may be applied in the control of the industrial process.

The first and/or the second mismatch may also be provided to the display 24 in order to be displayed to an operator. Thereby the operator can interpret what the agent is doing. This means that the solution becomes less of a black box. Existence of the mismatch doesn't mean that the operator necessarily must do anything with it. However, as it exists as a biproduct, a Graphical User Interface (GUI) could be constructed from which the operator can see what the agent is up to.

Aspects of the present disclosure can also be described in the following way:
The inverse neural network is trained on a LoFi model of the process that may be categorized by an uncertain parameter $\theta_P$, which refers to the uncertainties of the model. The inverse neural network generates N-step ahead control sequences according to a planned output trajectory and an uncertainty level.

The optimizer employs a planning optimization problem to calculate an optimal output trajectory towards the reference profile subject to rate and path constraints based on a given parameters setting.

The RL agent is trained to adjust and adapt the MPC and network tuning based on the process status for generating a suitable factor for tuning MPC and inverse neural network according to the current process status.

Various aspects disclosed herein can be summarized in five steps:

1. Develop a fully parameterized MPC scheme: boundary conditions (model), constraints and actuators limitations based on a low fidelity model of the system.
2. Utilize the proposed parameterized model to generate output data from a sequence of inputs covering all possible variations of the fitting parameters. (Collecting experimental data in the traditional sense, which means applying a sequence of u(k), to acquire y(k))
3. Train an inverse neural network able to retrieve N-step ahead input prediction $\hat{u}(k: k + N)$, based on output data (y(k)).
4. Introduce a convergence rate towards a planned trajectory and incorporate it with the network by solving the proposed optimization problem.
5. Run RL interacting with the fast MPC environment for training the unknown parameters of MPC toward the maximization of the overall performance, rather than replicating the model more precisely.

As a summary, there is proposed the use of Artificial intelligence (AI), particularly Reinforcement Learning (RL), for tuning a fast-MPC algorithm for optimal decision making of manipulated variables, which can have a significant impact on the process performance in terms of disturbance rejection and constraints satisfaction and ultimately the profitability of running the process. The path constraints on the target outputs are handled by the optimization problem, while the remaining inequality constraints are all addressed with the network training sessions. The whole algorithm takes advantage of using a low fidelity model to find a global optimal sequence of control inputs based on a predefined (economic) objective function.

Some of the advantages of the aspects described herein are:

- The short comings of conventional predictive optimization algorithms are complemented, where a high-fidelity model is either not available or too expensive to be redeemed within a moving horizon framework.
- A fast and computationally cheap optimization problem is used, which makes it industrially feasible for many applications such as marine, pulp and paper, power plants and chemical processes.
- There is a novel constraint handling by incorporating the inequality constraints into the training sessions and thereby the computational effort required by the optimizer is reduced.
- The introduced RL-guided MPC solution provides a dynamic shaping of the optimization problem according to the actual process variations.
- There is a feasible learning process for the RL agent as it interacts with a fast environment thanks to the Neural Network Inversion-based MPC.
- There is a practical and meaningful interpretation of the Agent activities thanks to the availability of a mismatch from which the operator can see what the agent is up to.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

**Claims**

1. A method for controlling an industrial process (32), the method being performed by a process control device (12) and comprising the steps of:

   obtaining a prediction (S120; S260) of a range of process control signals u(k: k + N) for the industrial process (32), which range of process control signals u(k: k + N) have been predicted using a prediction (S110; S250) of a range of process response signals y(k: k + N) in a model (28) of the industrial process (32) and which range of process response signals y(k: k + N) have been predicted based on a range of reference signals r(k: k +N), and
   applying (S130; S270) the predicted process control signals u(k: k + N) in the control of the process (32).

2. The method according to claim 1, wherein the predictions of the process response signals y(k: k + N) have been made based on the reference signals r(k: k +N) and a convergence rate $\alpha(k)$, where the convergence rate $\alpha(k)$ of the predictions of the process response signals y(k: k + N) may be optimized (S240), which optimization has been made while considering constraints b of the predicted process response signals y(k: k + N).

3. The method according to claim 2, where the range of reference signals r(k: k +N) is a range of optimal process response signals that the predicted process response signals y(k: k + N) are to converge against.

4. The method according to claim 2 or 3, wherein the optimization of the convergence rate $\alpha(k)$ has been made based on a considering of a determined (S220) first mismatch $\vartheta_1$ between the model (28) and the actual process (32) together with the constraints b for the predicted process response signals.

5. The method according to claim 4, wherein the optimization (S230) of the convergence rate $\alpha(k)$ has also been made while considering constraints b of the predicted control signals û(k: k + N) and possibly also together with a considering of a determined (S230) second mismatch $\vartheta_2$ between the model and the actual process.

6. The method according to claim 4 or 5, further comprising obtaining a determined mismatch and supplying it to an operator.

7. The method according to any previous claim, wherein the predicted process response signals y(k: k + N) are process response signals predicted for a current parametrisation $\theta_P(k)$ of the model (28).

8. The method according to claim 7, further comprising determining the current parametrisation $\theta_p(k)$ of the model (28) and supplying the current parametrisation $\theta_p(k)$ for being considered in the prediction of a range of process control signals.

9. The method according to any previous claim, wherein the model (28) has been trained (S200) using a training set of input and output signals.

10. The method according to claim 9, wherein in the training the training set of input and output signals have been fit to the predicted process response signals in a way so that the predicted process response signals are provided at a distance to constraints $\varphi$ on these predicted process response signals.

11. A process control device (12) for controlling an industrial process (32), said process control device comprising a processor (14) operative to:

   obtain a prediction of a range of process control signals $\hat{u}(k: k + N)$ for the industrial process (32), which range of process control signals $u(k: k + N)$ have been predicted using a prediction of a range of process response signals $y(k: k + N)$ in a model (28) of the industrial process (32) and which range of process response signals $y(k: k + N)$ have been predicted based on a range of reference signals $r(k:k +N)$, and
   apply the predicted process control signals $\hat{u}(k: k + N)$ in the control of the process (32).

12. The process control device according to claim 11, wherein the processor (14) is operative to implement a process response predictor (29) configured to predict the range of process response signals $y(k: k + N)$ and a trained inverse neural network (30) configured to predict the range of process control signals $u(k: k + N)$.

13. A process control system comprising the process control device according to claim 11 or 12.

14. A computer program for controlling an industrial process (32), the computer program comprising computer program code (18) which when run by a processor (14) causes the processor (14) to:

   obtain a prediction of a range of process control signals $\hat{u}(k: k + N)$ for the industrial process (32), which range of process control signals $u(k: k + N)$ have been predicted using a prediction of a range of process response signals $y(k: k + N)$ in a model (28) of the industrial process and which range of process response signals $y(k: k + N)$ have been predicted based on a range of reference signals $r(k: k +N)$, and
   apply the predicted process control signals $\hat{u}(k: k + N)$ in the control of the process (32).

15. A computer program product for controlling an industrial process (32), the computer program product comprising a data carrier (26) with said computer program according to claim 14.

PCD
12
~~~~~~~~~~~~~

| PCD |
| 12 |

V
10

**Fig. 1**

| D |
| 24 |

| PR |
| 14 |

| RCI |
| 20 |

16

18
PCF 19

| CCI |
| 22 |

**Fig. 2**

18

26

**Fig. 3**

$$\theta_P(i)$$

$$\underline{u(k: k + p)} \longrightarrow \boxed{\begin{array}{c} M \\ \underline{28} \end{array}} \longrightarrow y(k: k + p)$$

Fig. 4

$$y(k: k + q)|\theta_P(i)$$
$$u(k: k + q)|\theta_P(i)$$

$$y(k + q: k + p)|\theta_P(i)$$
$$u(k + q: k + p)|\theta_P(i)$$

k               k + q       k + p

$$N = p - q$$

Fig. 5

| S100 |
| :---: |
| Obtain range of reference signals r(k:k+N) |

↓

| S110 |
| :---: |
| Predict range of process response signals $\hat{y}(k: k+N)$ based on range of reference signals r(k:k+N) |

↓

| S120 |
| :---: |
| Predict range of process control signals $\hat{u}(k: k+N)$ using model M of the process in trained inverse neural network INN |

↓

| S130 |
| :---: |
| Apply process control signals in control of process AP |

Fig. 6

EP 4 653 958 A1

PRP
29

INN
30

$$\hat{y}(k+1) = r(k+1) + \alpha(\hat{y}(k) - r(k))$$
$$\hat{y}(k+2) = r(k+2) + \alpha(\hat{y}(k+1) - r(k+1))$$
$$\vdots$$
$$\hat{y}(k+N) = r(k+N) + \alpha(\hat{y}(k+N-1) - r(k+N-1))$$

$\hat{y}(k:k+N) \rightarrow$

$y(k-n:k) \rightarrow$

$u(k-n:k) \rightarrow$

$\hat{u}(k)$

$\hat{u}(k:k+N)$

$r(k:k+N)$

PCF
19

$y(k)$

AP
32

Actual Process

$\hat{u}(k)$

Fig. 7

$$\theta_P(i)$$

$$u(k{:}\,k+p) \longrightarrow \boxed{\begin{array}{c} M \\ \underline{28} \end{array}} \longrightarrow \begin{array}{l} y(k{:}\,k+p) \\ \tilde{y}(k{:}\,k+p) - \varphi \geq 0 \end{array}$$

### Fig. 8

| |
|---|
| **S200** <br> Train model M using training set of input and output signals |

$\downarrow$

| |
|---|
| **S210** <br> Obtain range of reference signals r(k:k+N) |

$\downarrow$

| |
|---|
| **S220** <br> Determine first mismatch $\vartheta_1$ between model M and actual process AP and supply to optimizer OP |

$\downarrow$

| |
|---|
| **S230** <br> Determine second mismatch $\vartheta_2$ between model M and actual process AP and supply to optimizer OP |

$\downarrow$

| |
|---|
| **S240** <br> Optimize convergence rate α in optimizer OP |

$\downarrow$

| |
|---|
| **S250** <br> Predict range of process response signals $\hat{y}$(k: k+N) based on range of reference signals r(k:k+N) |

$\downarrow$

| |
|---|
| **S260** <br> Determine updated parameter setting $\theta_P$ of model M and supply to inverse neural network INN |

$\downarrow$

| |
|---|
| **S270** <br> Predict range of process control signals $\hat{u}$(k: k+N) of the process in inverse neural network INN |

$\downarrow$

| |
|---|
| **S280** <br> Apply output signals in control of process AP |

### Fig. 9

Fig. 10

EP 4 653 958 A1

Europäisches
Patentamt
European
Patent Office
Office européen
des brevets

## EUROPEAN SEARCH REPORT

**Application Number**

EP 24 17 6852

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIEULOT JEAN-YVES: "Model Predictive Control of Fuel Cells Using a Neural Network Based Inverted Model", 2023 9TH INTERNATIONAL CONFERENCE ON CONTROL, DECISION AND INFORMATION TECHNOLOGIES (CODIT), IEEE, 3 July 2023 (2023-07-03), pages 864-869, XP034452100, DOI: 10.1109/CODIT58514.2023.10284413 [retrieved on 2023-10-24] | 1-3,7-15 | INV. G05B13/04 ADD. G05B13/02 |
| A | * the whole document * | 4-6 | |
| A | HASSANPOUR HESAM ET AL: "A practically implementable reinforcement learning control approach by leveraging offset-free model predictive control", COMPUTERS & CHEMICAL ENGINEERING, PERGAMON PRESS, OXFORD, GB, vol. 181, 23 November 2023 (2023-11-23), XP087443567, ISSN: 0098-1354, DOI: 10.1016/J.COMPCHEMENG.2023.108511 [retrieved on 2023-11-23] * abstract * | 1-15 | |

**TECHNICAL FIELDS SEARCHED (IPC)**

G05B

The present search report has been drawn up for all claims

| Place of search | Date of completion of the search | Examiner |
|---|---|---|
| The Hague | 30 October 2024 | Itoafa, Alex |

EPO FORM 1503 03.82 (P04C01)

**REFERENCES CITED IN THE DESCRIPTION**

**Patent documents cited in the description**

- WO 2007001252 A